# EUROPEAN PATENT APPLICATION

(11) **EP 1 178 583 A2**
(43) Date of publication of application: **06.02.2002**
(21) Application number: 01117836.5
(22) Date of filing: 23.07.2001
(51) Int. Cl.: H02G 1/00

(54) **Shear for cutting plastic raceways**

(30) Priority: 01.08.2000 IT VI000169
(71) Applicant: ELETTRO G s.n.c. di Lista Giampietro & C., 36014 Santorso (Vicenza) (IT)
(72) Inventor: Lista, Giampietro, 36010 Cogollo del Cengio (Vicenza) (IT); Busa, Pietro, 36015 Schio (Vicenza) (IT)
(74) Representative: Bettello, Pietro, Dott. Ing.

(57) **Abstract**

Shear for cutting plastic raceways, characterised in that it comprises a cutting unit (1) coupled to two side planes (2) which function as support for the raceway to cut (fig. 1).

## Description

The finding relates to a shear for cutting portions of plastic raceways, such as those used in electric installations.

As known, the so-called "raceways" are used in implementing electric installations, suitable to contain and insulate the electric wires of the installation from the exterior.

Such raceways, made of a plastic material, substantially consist of a U-shaped hollow body closed by a cover in its upper side.

Raceways are provided in some metre-long bars and afterwards, they are cut into pieces having the length requested by the installer, and such operation must occur, of course, in a quick and precise manner.

Purpose of the present finding is that of realising a device suitable for cutting to size raceways, which should exhibit both construction and operation advantages with respect to similar known devices.

This is realised by providing a manually or mechanically actuated shear where a cutting blade, provided with a sash motion, incises the side walls first and then, the base of the raceway, thus causing the separation of the same raceway into two portions.

The finding will be better defined with the description of a possible embodiment, made only by way of an illustrative and non-limiting example with reference to the attached drawings. In such drawings:
- Figure 1 (Table I) shows a global perspective view of the shear of the finding;

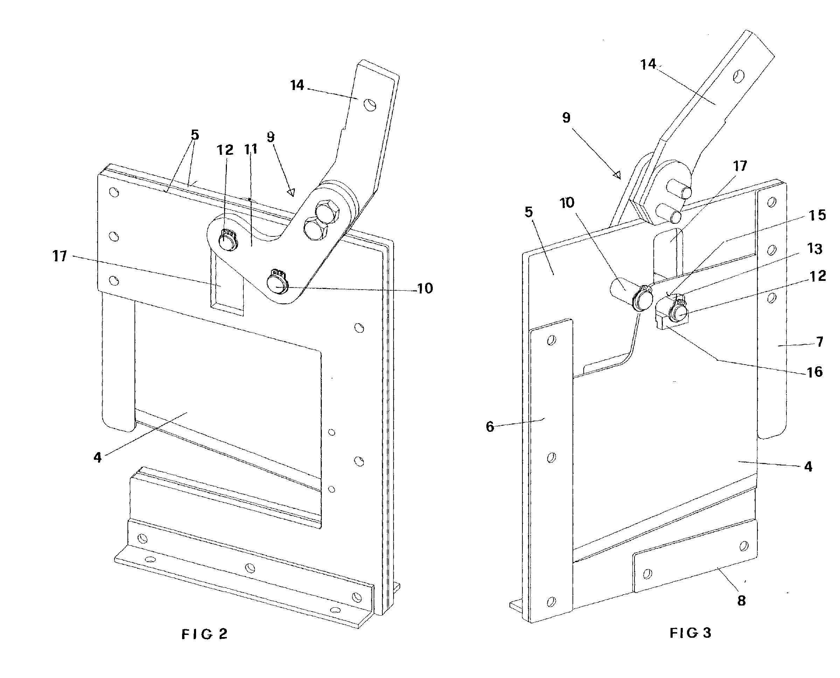

- Figure 2 (Table II) shows an outside, detailed perspective view of the shear;
- Figure 3 shows an inside, detailed perspective view of the shear of figure 2;

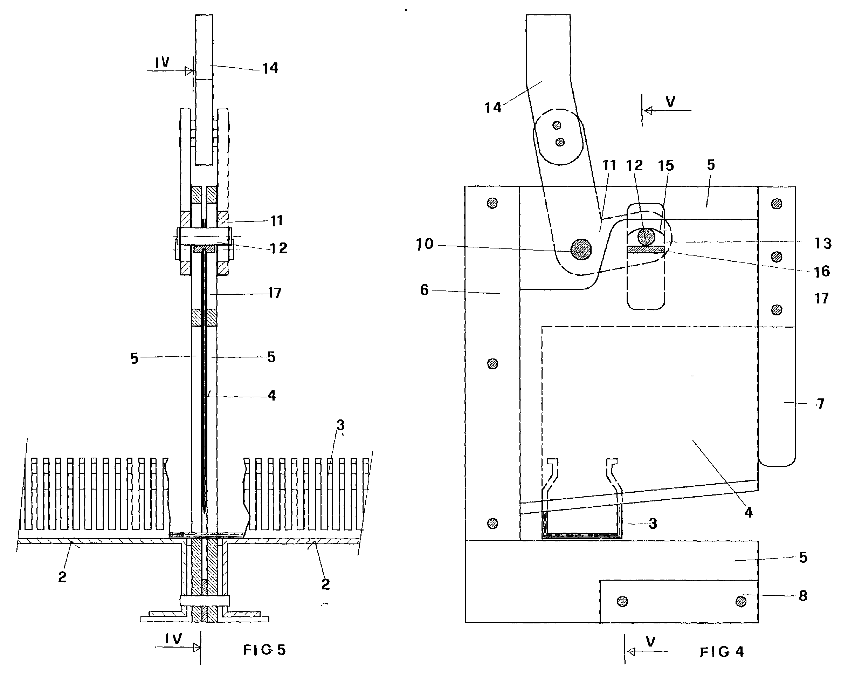

- Figure 4 (Table III) shows a front elevation view, sectioned according to line IV-IV of figure 5, of the shear of the finding;
- Figure 5 shows a side elevation view, sectioned according to line V-V of figure 4.

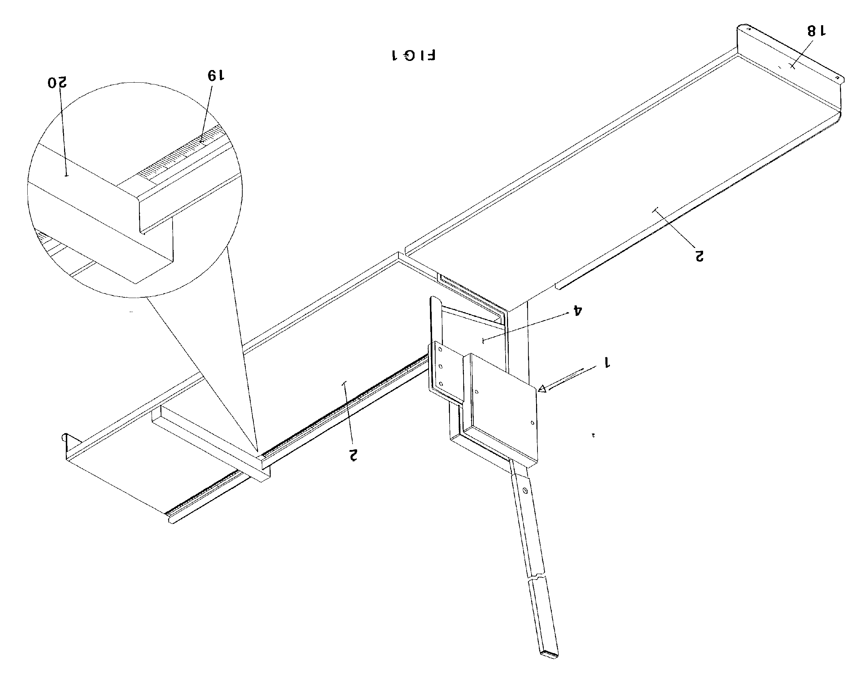

As it can be seen in figure 1, the device of the finding consists of a cutting unit or shear 1, coupled to two side planes 2 which function as support for the raceway 3 to cut.

As it can be seen in figures from 2 to 5, the shear consists of a blade 4 inserted between two parallel side walls 5, spaced by three laminations, respectively 6, 7 and 8, having a slightly greater thickness than the thickness of the above intermediate blade.

Such blade 4, held in guide by the side laminations 6 and 7, can slide so as to cause - with a so-called "sash" cutting - the separation of the underlying raceway 3 into two portions.

The alternative rectilinear motion of the cutting blade 4 is realised through a leverage 9 pivoted with pin 10 on the two side walls 5, and consisting of a first lever arm 11 that engages, through pin 12, into a slit 13 obtained on the same blade, and of a second lever arm 14, which serves as power arm for actuating the mechanism.

Advantageously, slit 13 exhibits an arched upper portion 15, so as to facilitate the sliding of pin 12, whereas a plate 16 is applied on the base of said slit so as to increase the support and thrust surface of the same pin.

Two lozenges 17, obtained on the side walls 15, are needed to allow the angular motion of pin 12.

Advantageously, the two side planes 2 are configured so as to exhibit two support feet 18, useful during the use of the equipment. In addition, said side walls and the body of shear 1 are reciprocally removable, thus allowing the disassembly of the same equipment and its storage, with minimum dimensions, when it is not used.

Advantageously, a scale 19, provided with cursor 20, is present on at least one of the two planes 2, for defining the length of the raceway portion to cut.

Of course, further embodiments are possible besides that described, in function of the size and of the type of raceway, or of the type of leverage movement, without departing from the scope of the claims defined hereinafter.

## Claims

1. SHEAR FOR CUTTING PLASTIC RACEWAYS, said raceways being of the type used in electric installations and configured according to a U-shaped section,
said shear **characterised in that** it comprises a cutting unit (1), coupled to two side planes (2) which function as support for the raceway (3) to cut.

2. SHEAR FOR CUTTING PLASTIC RACEWAYS, according to claim 1, **characterised in that** the cutting unit (1) consists of a blade (4) inserted between two parallel side walls (5), spaced by three laminations (6, 7, 8) having a slightly greater thickness than the thickness of the above intermediate blade.

3. SHEAR FOR CUTTING PLASTIC RACEWAYS, according to claim 2, **characterised in that** the blade (4), held in guide by the side laminations (6, 7), can slide so as to cause - with a so-called "sash" cutting - the separation of the underlying raceway 3 into two portions.

4. SHEAR FOR CUTTING PLASTIC RACEWAYS, according to claim 3, **characterised in that** the motion of the blade (4) is realised through a leverage (9) pivoted with the pin (10) on the two side walls (5), consisting of a first lever arm (11) that engages, through the pin (12), into a slit (13) obtained on the same blade, and of a second lever arm (14), which serves as power arm for actuating the mechanism.

5. SHEAR FOR CUTTING PLASTIC RACEWAYS, according to claim 4, **characterised in that** the slit (13) exhibits an arched upper portion (15), so as to facilitate the sliding of the pin (12).

6. SHEAR FOR CUTTING PLASTIC RACEWAYS, according to claim 4, **characterised in that** a plate (16) is applied on the base of the slit (13) so as to increase the support and thrust surface of the pin (12).

7. SHEAR FOR CUTTING PLASTIC RACEWAYS, according to one or more of the previous claims, **characterised in that** the two side planes (2) are configured so as to exhibit support feet (18).

8. SHEAR FOR CUTTING PLASTIC RACEWAYS, according to one or more of the previous claims, **characterised in that** the side planes (2) and the cutting unit (1) are reciprocally removable.

9. SHEAR FOR CUTTING PLASTIC RACEWAYS, according to one or more of the previous claims, **characterised in that** a scale (19) provided with a cursor (20) is applied on at least one of the two planes (2). The finding regards a radial piston pump/motor, according to the introducing part of claim 1.
